# EUROPEAN PATENT APPLICATION

(11) **EP 4 738 540 A1**
(43) Date of publication of application: **06.05.2026**
(21) Application number: 25808434.2
(22) Date of filing: 20.05.2025
(51) Int. Cl.: H01M 10/653, H01M 10/613, H01M 10/6568, H01M 10/625

(54) **BATTERY DEVICE**

(30) Priority: 24.05.2024 KR 20240067704
(71) Applicant: LG Energy Solution, Ltd., Seoul 07335 (KR)
(72) Inventor: PARK, Jeong Hoon, Daejeon 34122 (KR); SHIN, Ju Hwan, Daejeon 34122 (KR)
(74) Representative: Plasseraud IP
(86) International application number: PCT/KR2025/095330
(87) International publication number: WO 2025/244495

(57) **Abstract**

Disclosed herein relates to a battery device including: a base frame; a plurality of cell assemblies provided on the base frame, each including a plurality of battery cells; an inner frame provided on the base frame and disposed between the plurality of cell assemblies; a thermally conductive adhesive layer attaching the plurality of cell assemblies to the base frame; and a first thermal barrier pad containing a first thermally expandable material, disposed between each of the plurality of cell assemblies and the inner frame.

## Description

### [Technical Field]

The present disclosure relates to a battery device.

This application claims the benefit of Korean Patent Application No. 10-2024-0067704, filed on May 24, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

As secondary batteries are used in mobility applications, the demand for their safety has increased. If accidents such as fires occur in secondary batteries used in mobility, they can endanger the life of the driver. Therefore, research on technologies to enhance the safety of secondary batteries is indispensable.

### [Summary]

### [Technical Problem]

The technical problem that the present disclosure aims to solve is to provide a battery device.

### [Technical Solution]

To solve the aforementioned problems, the technical concept of the present disclosure provides a battery device including: a base frame; a plurality of cell assemblies provided on the base frame, each including a plurality of battery cells; an inner frame provided on the base frame and disposed between the plurality of cell assemblies; a thermally conductive adhesive layer attaching the plurality of cell assemblies to the base frame; and a first thermal barrier pad containing a first thermally expandable material, disposed between each of the plurality of cell assemblies and the inner frame.

In exemplary embodiments, a portion of the first thermal barrier pad is provided between the inner frame and the thermally conductive adhesive layer.

In exemplary embodiments, the first thermal barrier pad is connected to the thermally conductive adhesive layer.

In exemplary embodiments, the battery device further includes a second thermal barrier pad disposed within the thermally conductive adhesive layer and containing a second thermally expandable material.

In exemplary embodiments, the second thermal barrier pad includes a plurality of first holes filled with the thermally conductive adhesive layer.

In exemplary embodiments, the thermally conductive adhesive layer is in direct contact with the base frame and the plurality of battery cells.

In exemplary embodiments, the second thermal barrier pad has a mesh structure.

In exemplary embodiments, the second thermal barrier pad includes: a base layer including a plurality of second holes; and a thermal expandable layer extending along the base layer and containing a second thermally expandable material.

In exemplary embodiments, the base layer has a mesh structure.

In exemplary embodiments, the first thermally expandable material includes expanded graphite.

In exemplary embodiments, the base frame includes a cooling channel configured to allow a cooling fluid to flow.

In exemplary embodiments, the battery device further includes: a top frame covering the plurality of cell assemblies, wherein the top frame is spaced apart from the plurality of cell assemblies with a venting space in between.

### [Advantageous Effects]

According to exemplary embodiments of the present disclosure, the battery device includes a thermal barrier pad containing a thermally expandable material, thereby preventing or suppressing the transfer of heat emitted from a cell assembly experiencing a thermal event to other cell assemblies through a frame. By preventing or suppressing heat transfer between cell assemblies, the safety and reliability of the battery device can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view showing a battery device according to exemplary embodiments of the present disclosure.
FIG. 2 is a cross-sectional view of the battery device taken along line II-II' of FIG. 1.
FIG. 3 is a cross-sectional view showing a battery device in which a thermal event has occurred.
FIG. 4 is a cross-sectional view showing a battery device according to exemplary embodiments of the present disclosure.
FIG. 5 is a cross-sectional view of the battery device taken along line V-V' of FIG. 4.
FIG. 6 is a cross-sectional view showing a battery device according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

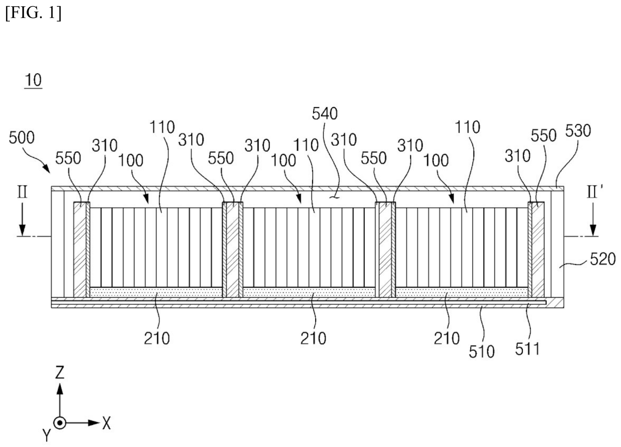

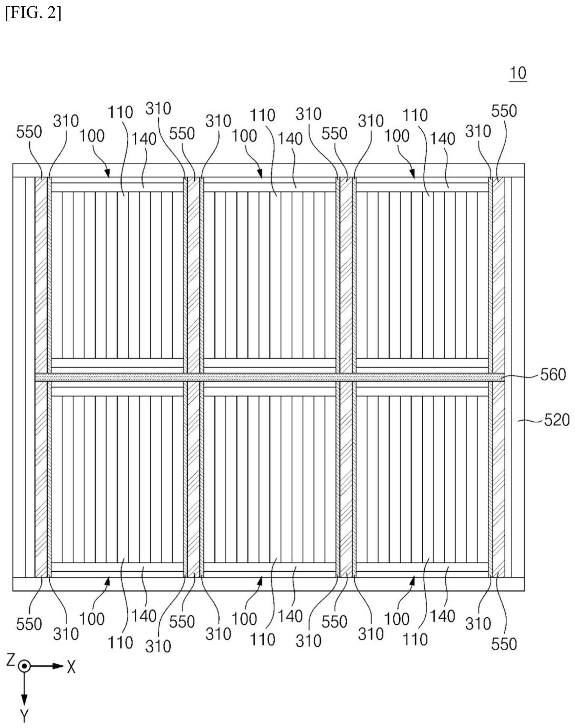

FIG. 1 is a cross-sectional view showing a battery device 10 according to exemplary embodiments of the present disclosure. FIG. 2 is a cross-sectional view of the battery device 10 taken along line II-II' of FIG. 1.

Referring to FIGS. 1 and 2, the battery device 10 may include a housing 500, a plurality of cell assemblies 100, a thermally conductive adhesive layer 210, and a first thermal barrier pad 310.

The housing 500 may provide an internal space for accommodating the plurality of cell assemblies 100. The housing 500 may include a base frame 510, a side frame 520, a top frame 530, and a plurality of inner frames 550.

The base frame 510 may support the plurality of cell assemblies 100. The base frame 510 may have a plate-like form extending in a first horizontal direction (e.g., X-direction) and a second horizontal direction (e.g., Y-direction). The plurality of cell assemblies 100 may be arranged on the base frame 510 in the first horizontal direction (e.g., X-direction) and the second horizontal direction (e.g., Y-direction).

The base frame 510 may include cooling channels 511 configured for a cooling fluid to flow. The cooling fluid provided externally to the base frame 510 may be supplied to an inlet of the cooling channel 511, flow along the cooling channel 511, and be discharged externally through an outlet of the cooling channel 511. While the cooling fluid flows through the cooling channel 511, cooling of the cell assembly 100 may occur. The cooling fluid may include coolant and/or refrigerant. The housing 500 may be equipped with a pipe configured to deliver the cooling fluid to the cooling channel 511 of the base frame 510. Cooling fluid supplied from an external source may be delivered through the pipe to the cooling channel 511 of the base frame 510. In this disclosure, the base frame 510 may be referred to as a cooling frame.

The side frame 520 may extend along the perimeter of the base frame 510 and may enclose the cell assembly 100.

The top frame 530 may be fastened atop the side frame 520 to cover a plurality of cell assemblies 100. The top frame 530 may have a plate-like shape extending in a first horizontal direction (e.g., X-direction) and a second horizontal direction (e.g., Y-direction). The top frame 530 may be spaced vertically (e.g., in the Z-direction) from the plurality of cell assemblies 100 with a venting space 540 in between.

A plurality of inner frames 550 may partition the interior space of the housing 500 into a plurality of accommodation spaces. The plurality of accommodation spaces defined by the plurality of inner frames 550 may be separated or partitioned from each other in a first horizontal direction (e.g., X-direction). One or more cell assemblies 100 may be disposed in each of the plurality of accommodation spaces of the housing 500 defined by the plurality of inner frames 550. In exemplary embodiments, the plurality of inner frames 550 may be spaced apart from each other in a first horizontal direction (e.g., the X-direction), and each inner frame 550 may extend in a second horizontal direction (e.g., the Y-direction). A single cell assembly 100 may be disposed between a pair of inner frames 550. A single inner frame 550 may be disposed between adjacent cell assemblies 100 in the first horizontal direction (e.g., X-direction). Each inner frame 550 may contact the side of the corresponding cell assembly 100.

The housing 500 may further include a center frame 560 extending in a first horizontal direction (e.g., X-direction) on the base frame 510. The center frame 560 may partition the internal space of the housing 500 into a plurality of spaces. The plurality of spaces defined by the center frame 560 may be separated or partitioned from each other in a second horizontal direction (e.g., the Y-direction), and two or more cell assemblies 100 arranged in the first horizontal direction (e.g., the X-direction) may be placed in each of the plurality of spaces defined by the center frame 560.

The cell assembly 100 may be mounted on the base frame 510. The cell assembly 100 may include a plurality of battery cells 110. The cell assembly 100 may correspond to a battery module or a cell-to-pack structure.

Each battery cell 110 is a lithium-ion battery, i.e., the basic unit of a secondary battery. Each battery cell 110 may include an electrode assembly, an electrolyte, and a cell case. The electrode assembly incorporated within the cell case may include a positive electrode, a negative electrode, and a separator interposed between the positive electrode and negative electrode. The electrode assembly may be either a jelly-roll type or a stack-type, depending on its assembly form. The jelly-roll type electrode assembly may include a wound structure of a positive electrode, a negative electrode, and a separator interposed between them. The stack-type electrode assembly may include a plurality of positive electrodes stacked sequentially, a plurality of negative electrodes stacked sequentially, and a plurality of separators interposed between them. The positive electrode may include a positive electrode current collector and a positive electrode active material. The negative electrode may include a negative electrode current collector and a negative electrode active material.

Each battery cell 110 may correspond to a pouch-type battery cell, a cylindrical battery cell, or a prismatic battery cell. The electrode assembly of a pouch-type battery cell is enclosed within a pouch case including an aluminum laminate sheet. The electrode assembly of a cylindrical battery cell is enclosed within a cylindrical metal can. The electrode assembly of a prismatic battery cell is enclosed within a prismatic metal can.

The plurality of battery cells 110 provided in the cell assembly 100 may be connected in series and/or in parallel. For example, the plurality of battery cells 110 may be connected in series with each other. For example, the plurality of battery cells 110 may also be connected in parallel with each other. For example, when defining a set of two or more battery cells 110 connected in parallel as a bank, one bank composed of two or more battery cells 110 connected in parallel and another bank composed of two or more battery cells 110 connected in parallel can be connected in series.

In exemplary embodiments, the plurality of battery cells 110 provided in the cell assembly 100 may be arranged in a first horizontal direction (e.g., X-direction), and each battery cell 110 may extend in a second horizontal direction (e.g., Y-direction). An electrode lead may be provided on at least one of the two ends of each battery cell 110 along the second horizontal direction (e.g., Y-direction). The electrode leads of adjacent battery cells 110 among the plurality of battery cells 110 may be electrically and physically connected to each other.

The cell assembly 100 may include a busbar frame connected to the sides of the plurality of battery cells 110. The busbar frame may be positioned at each of the two ends along the second horizontal direction (e.g., Y-direction) of the cell assembly 100. The busbar frame may support the busbars and the electrode leads of the battery cells 110. The busbars may be electrically and physically connected to at least one of the electrode leads of the plurality of battery cells 110. The busbars may be coupled to at least one of the electrode leads of the plurality of battery cells 110 by welding.

A thermally conductive adhesive layer 210 may be interposed between each of the plurality of cell assemblies 100 and the base frame 510. The plurality of battery cells 110 provided in each of the plurality of cell assemblies 100 may be attached to the base frame 510 by the thermally conductive adhesive layer 210. The upper part of the thermally conductive adhesive layer 210 may be in direct contact with each of the plurality of battery cells 110, and the lower part of the thermally conductive adhesive layer 210 may be in direct contact with the base frame 510. The thermally conductive adhesive layer 210 can thermally couple each of the plurality of battery cells 110 to the base frame 510. The thermally conductive adhesive layer 210 may include a thermal resin and/or a thermal interface material.

A first thermal barrier pad 310 may be provided between each cell assembly 100 and each inner frame 550. The first thermal barrier pad 310 may prevent or inhibit thermal propagation between each cell assembly 100 and its corresponding inner frame 550. For example, the cell assembly 100 may be disposed between a pair of inner frames 550, and the first thermal barrier pad 310 may be provided between each of the pair of inner frames 550 and the cell assembly 100. At least one side of the inner frame 550 may face the cell assembly 100, and the first thermal barrier pad 310 may extend along at least one side of the inner frame 550. The first thermal barrier pad 310 may contact the side part of the corresponding cell assembly 100. In exemplary embodiments, a portion of the first thermal barrier pad 310 may be provided between the inner frame 550 and the thermally conductive adhesive layer 210. In exemplary embodiments, a portion of the first thermal barrier pad 310 may be connected to the thermally conductive adhesive layer 210.

The first thermal barrier pad 310 may include a thermally expandable material. The thermally expandable material of the first thermal barrier pad 310 may be fire-resistant and configured to expand in volume above a specific temperature. When a thermal event, such as ignition and/or thermal runaway of the battery cell 110, occurs within the cell assembly 100, the thermally expandable material of the first thermal barrier pad 310 expands, and the expanded thermally expandable material can form an insulating layer 391 around the cell assembly 100 where the thermal event occurred. Heat transfer between the cell assembly 100 where the thermal event occurred and other cell assemblies 100, and heat transfer between the cell assembly 100 where the thermal event occurred and the base frame 510, may be suppressed or blocked by the insulating layer 391.

In exemplary embodiments, the thermally expandable material of the first thermal barrier pad 310 may include expanded graphite, vermiculite, or a combination thereof. In exemplary embodiments, the first thermal barrier pad 310 may include a base layer and thermally expandable particles within the base layer. The base layer may include polymer and/or glass fiber, wherein the polymer may be polyurethane or silicone. The thermally expandable particles may be particles or capsules containing the thermally expandable material.

In exemplary embodiments, the thermally expandable material of the first thermal barrier pad 310 may be configured to expand in volume by a factor of 10 to 50 times upon exceeding an expansion initiation temperature. The expansion initiation temperature may be 100°C or higher, 200°C or higher, 300°C or higher, 400°C or higher, or 500°C or higher.

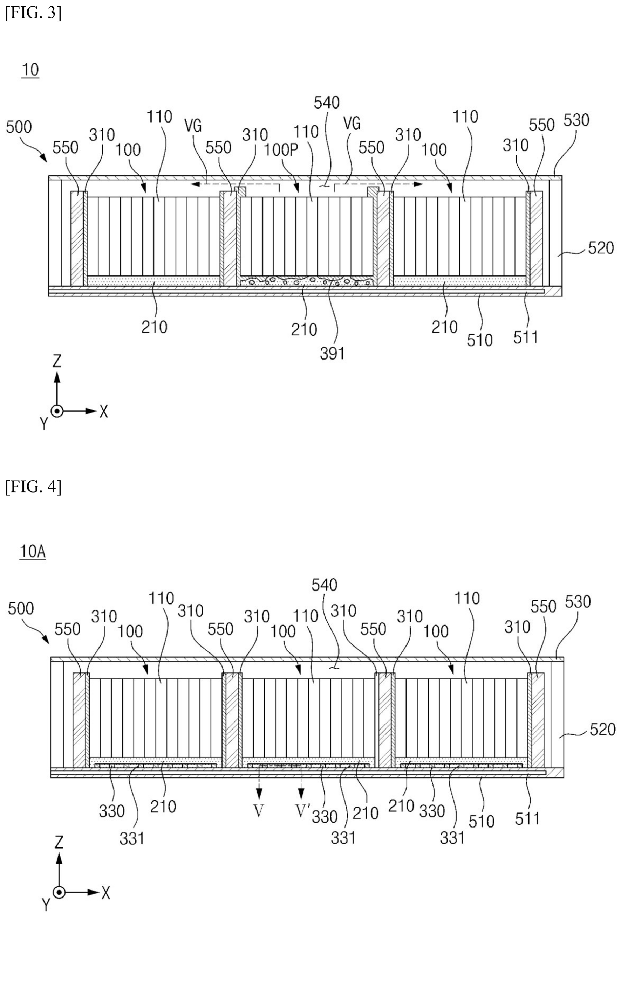

FIG. 3 is a cross-sectional view showing a battery device 10 where a thermal event has occurred.

Referring to FIG. 3, when a thermal event, such as ignition of a battery cell 110, occurs within a cell assembly 100P, the thermally expandable material within a first thermal barrier pad 310 surrounding the cell assembly 100P where the thermal event occurred expands, and the expanded thermally expandable material can form an insulating layer 391 around the cell assembly 100P where the thermal event occurred. More specifically, a thermal event may cause the thermally conductive adhesive layer 210 to thermally deform, forming voids and/or cavities around the cell assembly 100P. The voids and/or cavities formed by the thermal deformation of the thermally conductive adhesive layer 210 may then be filled by the expanded thermally expandable material, thereby forming the insulating layer 391. Heat transfer between the cell assembly 100P where the thermal event occurred and the base frame 510 is suppressed or blocked by the insulating layer 391, preventing or inhibiting the transfer of heat emitted from the cell assembly 100P where the thermal event occurred to other cell assemblies 100 through the base frame 510. By preventing or inhibiting heat transfer between the cell assemblies 100, the safety and reliability of the battery device 10 can be improved.

Furthermore, when a thermal event such as ignition of a battery cell 110 occurs within a cell assembly 100, high-temperature gas and/or flames generated from the cell assembly 100 can flow from the cell assembly 100 toward the top frame 530 and flow laterally (e.g., in the X-direction and/or Y-direction) along the bottom surface of the top frame 530. An insulating layer 391 formed by the expansion of a thermally expandable material is provided between the cell assembly 100 and the inner frame 550 and between the cell assembly 100 and the base frame 510, so high-temperature gas and/or flames generated from the cell assembly 100 can be vented upward where no insulating layer 391 is provided, thereby enhancing directional venting that directs the high-temperature gas and/or flames along an intended path.

### (Second embodiment)

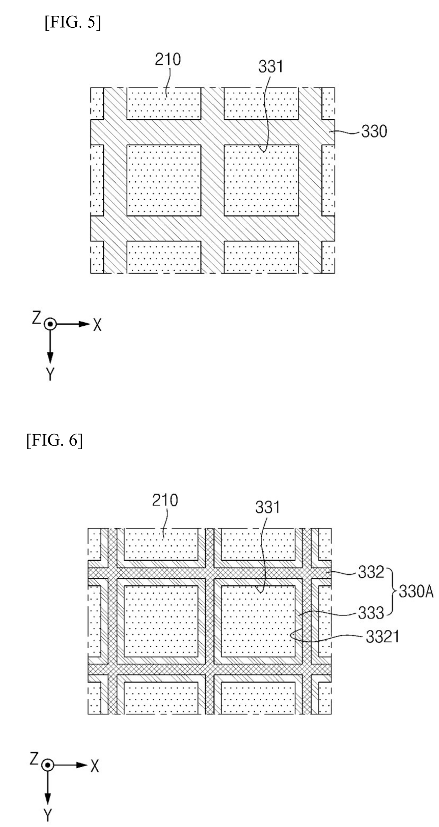

FIG. 4 is a cross-sectional view showing a battery device 10A according to exemplary embodiments of the present disclosure. FIG. 5 is a cross-sectional view of the battery device 10A taken along line V-V' of FIG. 4. Hereinafter, the battery device 10A of FIGS. 4 and 5 is described with a focus on the differences from the battery device 10 described with reference to FIGS. 1 and 2.

Referring to FIGS. 4 and 5, the battery device 10A may include a second thermal barrier pad 330 provided within the thermally conductive adhesive layer 210. The second thermal barrier pad 330 may include a thermally expandable material. The thermally expandable material of the second thermal barrier pad 330 may be fire-resistant and configured to expand in volume above a specific temperature. The thermally expandable material of the second thermal barrier pad 330 may include expanded graphite, vermiculite, or a combination thereof. The thermally expandable material of the second thermal barrier pad 330 may be substantially the same or similar to the thermally expandable material of the first thermal barrier pad 310. When a thermal event, such as ignition and/or thermal runaway of the battery cell 110, occurs within the cell assembly 100, the thermally expandable material of the second thermal barrier pad 330 expands, and the expanded thermally expandable material may form an insulating layer 391 between the cell assembly 100 where the thermal event occurred and the base frame 510. Heat transfer between the cell assembly 100 where the thermal event occurred and the base frame 510 may be suppressed or blocked by the insulating layer 391.

The second thermal barrier pad 330 may have a mesh structure, a net structure, or a grid structure. The second thermal barrier pad 330 may include a plurality of holes 331. The plurality of holes 331 in the second thermal barrier pad 330 may be arranged in a first horizontal direction (e.g., X-direction) and a second horizontal direction (e.g., Y-direction). When viewed in a plane, the plurality of holes 331 in the second thermal barrier pad 330 may be polygonal, such as circular or square.

The thermally conductive adhesive layer 210 may fill the plurality of holes 331 of the second thermal barrier pad 330. When the thermally expandable material of the second thermal barrier pad 330 is in an unexpanded state, heat transfer between the base frame 510 and the plurality of battery cells 110 can occur through the thermally conductive adhesive layer 210 filling the plurality of holes 331 in the second thermal barrier pad 330.

### (Third embodiment)

FIG. 6 is a cross-sectional view illustrating a battery device according to exemplary embodiments of the present disclosure. Herein, the battery device of FIG. 6 is described with a focus on the differences from the battery device 10A described with reference to FIGS. 4 and 5.

Referring to FIG. 6, in the battery device, the second thermal barrier pad 330A may include a base layer 332 and a thermally expandable layer 333.

The base layer 332 may have a mesh structure, a net structure, or a grid structure. The base layer 332 may include a plurality of holes 3321. The plurality of holes 3321 in the base layer 332 may be arranged in a first horizontal direction (e.g., X-direction) and a second horizontal direction (e.g., Y-direction). When viewed in a plane, the plurality of holes 3321 in the base layer 332 may be polygonal, such as circular or square. The base layer 332 may include an insulating material. For example, the base layer 332 may include plastic, but is not limited thereto.

The thermally expandable layer 333 may include a thermally expandable material. The thermally expandable layer 333 may extend conformally along the surface of the base layer 332. The thermally expandable layer 333 may be coated onto the base layer 332 to have a uniform thickness. The base layer 332 may be covered by the thermally expandable layer 333 and not exposed externally. The thermally expandable layer 333 may be formed through a dipping process, where the base layer 332 is dipped into a solution containing a thermally expandable material, or through a spraying process, where a thermally expandable material is sprayed onto the base layer 332; however, the method of forming the thermally expandable layer 333 is not limited to these.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A battery device comprising:
a base frame;
a plurality of cell assemblies provided on the base frame, each including a plurality of battery cells;
an inner frame provided on the base frame and disposed between the plurality of cell assemblies;
a thermally conductive adhesive layer attaching the plurality of cell assemblies to the base frame; and
a first thermal barrier pad containing a first thermally expandable material, disposed between each of the plurality of cell assemblies and the inner frame.

2. The battery device of claim 1, wherein
a portion of the first thermal barrier pad is provided between the inner frame and the thermally conductive adhesive layer.

3. The battery device of claim 1, wherein
the first thermal barrier pad is connected to the thermally conductive adhesive layer.

4. The battery device of claim 1, further comprising:
a second thermal barrier pad disposed within the thermally conductive adhesive layer and containing a second thermally expandable material.

5. The battery device of claim 4, wherein
the second thermal barrier pad comprises a plurality of first holes filled with the thermally conductive adhesive layer.

6. The battery device of claim 5, wherein
the thermally conductive adhesive layer is in direct contact with the base frame and the plurality of battery cells.

7. The battery device of claim 4, wherein
the second thermal barrier pad has a mesh structure.

8. The battery device of claim 4, wherein
the second thermal barrier pad comprises:
a base layer comprising a plurality of second holes; and
a thermal expandable layer extending along the base layer and containing the second thermally expandable material.

9. The battery device of claim 8, wherein
the base layer has a mesh structure.

10. The battery device of claim 1, wherein
the first thermally expandable material comprises expanded graphite.

11. The battery device of claim 1, wherein
the base frame comprises a cooling channel configured to allow a cooling fluid to flow.

12. The battery device of claim 1, further comprising:
a top frame covering the plurality of cell assemblies,
wherein the top frame is spaced apart from the plurality of cell assemblies with a venting space in between.
